# EUROPÄISCHE PATENTSCHRIFT

(11) **EP 2 356 382 B1**
(45) Veröffentlichungstag und Bekanntmachung des Hinweises auf die Patenterteilung: **07.12.2016**
(21) Anmeldenummer: 09756243.3
(22) Anmeldetag: 24.10.2009
(51) Int. Cl.: H02S 20/00, F24J 2/46, F24J 2/52

(54) **SOLARMODUL-TRAGKONSTRUKTION**
SOLAR MODULE SUPPORTING STRUCTURE
CONSTRUCTION PORTEUSE POUR MODULES SOLAIRES

(30) Priorität: 12.11.2008 DE 202008015017 U; 12.11.2008 DE 102008057012; 22.06.2009 DE 202009008652 U
(43) Veröffentlichungstag der Anmeldung: 17.08.2011
(73) Patentinhaber: Bochumer Eisenhütte Heintzmann GmbH & Co. Bau- und Beteiligungs KG, 44793 Bochum (DE)
(72) Erfinder: VON LINSINGEN-HEINTZMANN, Barbara, 44797 Bochum (DE); LASS, Horst, 44867 Bochum (DE); HEIMANN, Werner, 66583 Spiesen-Elversberg (DE)
(74) Vertreter: Ksoll, Peter
(86) Internationale Anmeldenummer: PCT/DE2009/001498
(87) Internationale Veröffentlichungsnummer: WO 2010/054617

(56) Entgegenhaltungen:
- DE-A1- 3 305 266
- DE-A1- 10 054 349
- DE-U1-202007 008 659
- DE-U1-202008 001 010
- JP-A- 2004 116 240

## Beschreibung

Die Erfindung betrifft eine Anordnung mit Solarmodul-Tragkonstruktion und Solarmodulen gemäß den Merkmalen im Oberbegriff des Anspruchs 1.

Eine Solarmodul-Tragkonstruktion zählt im Umfang der DE 20 2008 001 010 U1 zum Stand der Technik. Sie weist vertikal ausgerichtete Pfosten, von den Pfosten unter Eingliederung von Anschlusselementen getragene geneigte Riegel, zwischen den Pfosten und den Riegeln vorgesehene Schrägstreben und auf den Riegeln in Querrichtung platzierte Pfetten als Träger von Solarmodulen auf. Die durch Abkanten von Stahlplatinen gebildeten Riegel und Pfetten weisen einen U-förmigen Querschnitt auf, der sich aus zwei Stützschenkeln, zwei Montageflanschen und einem Tragsteg zusammensetzt.

Eine Eigenschaft der bekannten Tragkonstruktion ist die Windanfälligkeit der von den Pfetten getragenen Solarmodule. Auf Grund der Art ihrer Befestigung auf den Pfetten neigen die Solarmodule nicht nur zum Flattern, sondern sie können wegen der teilweise enormen Windkräfte auch von den Pfetten gerissen werden. Die Pfetten selber werden von Aufnahmeschuhen mit schräg nach oben offenen Stecknuten getragen, welche auf die Riegel geklemmt werden.

Zum Stand der Technik zählt ferner die Tragkonstruktion gemäß der DE 33 05 266 A1. Diese umfasst eine Riegelbauart mit einer sich geneigt erstreckenden Holzlatte. Auf dieser Holzlatte wird eine Basisschiene mit zwei nebeneinander verlaufenden, sich nach oben erstreckenden starren Schenkeln befestigt. Auf den seitlich vorstehenden Schenkeln der Basisschiene werden in Aussparungen Profilleisten festgelegt, die insgesamt fünf horizontal gerichtete, seitlich abstehende kurze Rippen besitzen.

Die beiden unteren Rippen dienen der Festlegung einer Isolierplatte, die dritte und vierte Rippe der Festlegung einer Absorptionsplatte und die vierte sowie fünfte Rippe der Fixierung einer Abdeckung mit einer Filterschicht.

Die eingezogenen seitlichen Ränder der Abdeckung werden von nach unten gerichteten kurzen Flanschen eines stabilen Kappenstreifens übergriffen. Dieser weist ferner nach unten gerichtete Schenkel auf, die zwischen die Schenkel der Basisschiene eingeführt und aufgrund der dreieckigen Vorsprünge an den Schenkeln lageorientiert werden.

Der Erfindung liegt - ausgehend vom Stand der Technik - die Aufgabe zu Grunde, eine Anordnung mit Solarmodul-Tragkonstruktion und Solarmodulen zu schaffen, welche auch bei hohen Windkräften eine sichere Fixierung der Solarmodule auf den Pfetten gewährleistet.

Die Lösung dieser Aufgabe besteht nach der Erfindung in den Merkmalen des Anspruchs 1.

Vorteilhafte Weiterbildungen sind Gegenstand der Ansprüche 2 bis 13.

Es sind nunmehr Pfetten eines ersten Typs und Pfetten eines zweiten Typs vorgesehen, die grundsätzlich jeweils einen U-förmigen Querschnitt besitzen, der sich aus zwei Stützschenkeln, zwei Montageflanschen und einem Tragsteg zusammensetzt.

Die Pfetten des ersten Typs besitzen oberhalb der Tragstege mindestens eine seitliche Stecknute zum Einführen von sich horizontal erstreckenden Rändern der

Solarmodule. Dabei können an solchen Pfetten auch zwei in entgegengesetzte Richtungen weisende Stecknuten vorgesehen sein.

Bei den Pfetten des zweiten Typs sind mittig der Tragstege nach oben offene Klemmnuten ausgebildet. Diese Klemmnuten dienen der Aufnahme von Federschenkeln T-förmiger Klemmstücke mit zu den Federschenkeln hin konkav gebogenen Decklaschen.

Bei der Montage wird jedes Solarmodul mit einem horizontalen Rand zunächst in eine Stecknute einer Pfette des ersten Typs eingeschoben und dann mit dem gegenüber liegenden Rand auf einen neben der Klemmnute befindlichen Abschnitt des Tragstegs einer Pfette des zweiten Typs abgelegt. Danach werden die Federschenkel der Klemmstücke in die Klemmnute gedrückt. Auf diese Weise liegt ein Rand eines Solarmoduls gesichert in einer Stecknute einer Pfette des ersten Typs, während bei den Pfetten des zweiten Typs die zu den Federschenkeln hin konkav gestalteten Decklaschen gemeinsam mit den neben den Klemmnuten liegenden Abschnitten des Tragstegs den anderen Rand des Solarmoduls so fest einspannen, dass hohe Haltekräfte erzeugt werden. Die Solarmodule liegen sicher auf der Tragkonstruktion. Interne Versuche haben ergeben, dass Haltekräfte von 700 kg und mehr erzeugt werden. Auf Grund dieser speziellen Einspannungen der Ränder der Solarmodule neigen diese auch nicht mehr zum Flattern.

Da nur an den Pfetten des zweiten Typs Klemmstücke erforderlich sind, kann die Anzahl der benötigten Klemmstücke erheblich reduziert werden.

Zweckmäßig ist es ferner, dass am unteren und oberen Rand einer Tragkonstruktion jeweils Pfetten des ersten Typs angeordnet werden, die nur eine seitliche Stecknute aufweisen.

Vorteilhaft sind die Klemmnuten an den Tragstegen der Pfetten des zweiten Typs an ihren inneren Enden mit seitlichen Hinterschneidungen versehen und die Federschenkel der Klemmstücke besitzen an ihren den Decklaschen fernen Enden voneinander abgewandte, zu den Decklaschen weisende Rasthaken.

Bei der Montage der Klemmstücke gleiten die Enden der Federschenkel mit den Rasthaken so weit in die Klemmnuten, bis dass auf Grund der zu den Rasthaken hin konkaven Gestaltung der Decklaschen deren seitliche Spannflansche sich federnd elastisch an den Rändern der Solarmodule abstützen und die Decklaschen weitgehend flach gedrückt werden. Dadurch spreizen sich die Federschenkel und die Rasthaken fassen auszugssicher in die Hinterschneidungen. Die spezielle Gestaltung der Klemmstücke erzeugt mithin auf Grund ihrer federnden Nachgiebigkeit eine hohe Haltekraft mit der damit verbundenen Lagesicherheit der Solarmodule auf den Pfetten des zweiten Typs.

Grundsätzlich ist es denkbar, dass die Klemmstücke eine Länge aufweisen, die sich über die gesamte Länge eines Solarmoduls erstreckt. Es ist indessen insbesondere aus wirtschaftlichen Gründen zweckmäßiger, die Klemmstücke kürzer auszubilden, wobei je nach den örtlichen Verhältnissen zwei oder mehr Klemmstücke entlang der Ränder der Solarmodule vorgesehen werden.

An den Tragstegen der Pfetten des zweiten Typs sind ferner von den Montageflanschen abgewandte Anschlagstege ausgebildet. Diese mittels Abkanten bei der Fertigung der Pfetten hergestellten Anschlagstege erhöhen die Lagesicherheit der Solarmodule auf den Pfetten und erleichtern auch deren Montage.

Um die erfindungsgemäß angestrebte Federwirkung der Klemmstücke zu gewährleisten, sind diese bevorzugt aus abgekanteten Stahlplatinen, insbesondere Federstahlplatinen, gebildet. Dabei sind die Decklaschen im Bereich ihrer seitlichen Spannflansche doppellagig gestaltet, wobei an die inneren Enden der unteren Lagen der Spannflansche sich die Federschenkel anschließen, deren Enden dann mit den in Richtung zu den Spannflanschen abgekanteten Rasthaken versehen sind.

Denkbar ist aber auch, dass die Klemmstücke aus Kunststoff bestehen können.

Ferner ist es vorstellbar, dass die Klemmstücke aus einem kohlefaserverstärkten Werkstoff gebildet sind. Ein derartiger Werkstoff kann beispielsweise Kevlar (Aramid) sein.

Die seitlichen Stecknuten der Pfetten des ersten Typs sind von L- oder T-förmigen mittleren Abkantungen der Tragstege gebildet. L-förmige Abkantungen erfolgen zur Herstellung von nur einer Stecknute und T-förmige Abkantungen zur Ausbildung von zwei Stecknuten an einer Pfette des ersten Typs.

Einem eventuellen Flattern der Solarmodule wird nach der Erfindung ferner dadurch vorgebeugt, dass die Ränder der Solarmodule von U-förmigen Dämpfungsleisten umgriffen sind. Danach besteht kein direkter Kontakt zwischen den Rändern der Solarmodule und den Decklaschen der Klemmstücke einerseits sowie Teilen der Pfetten andererseits.

Bevorzugt sind die Dämpfungsleisten aus Gummi oder einem vergleichsweise ähnlichen elastischen Werkstoff gebildet.

Die Verwindungsstabilität aller Pfetten wird dadurch erhöht, dass ihre Stützschenkel in Richtung auf die Montageflansche konvergierend verlaufen.

In einem weitgehend ebenen Gelände ist es auch aus wirtschaftlichen Gründen vorteilhaft, die Riegel den Pfosten so zuzuordnen, dass eine Winkelverstellbarkeit nicht möglich ist. In hügeligen Geländen kann es bei Bedarf jedoch sinnvoll sein, dass die Anschlusselemente zwischen den kopfseitigen Enden der Pfosten und den Riegeln begrenzt schwenkbar und die Schrägstreben zwischen den Pfosten und den Riegeln längenveränderbar ausgebildet sind. Mit Hilfe der Schrägstreben ist es dann nicht nur bei der Montage der Tragkonstruktion, sondern auch während des laufenden Betriebs möglich, die Neigung der Solarmodule ändern zu können.

Obwohl der Querschnitt der Pfosten an sich beliebig sein kann, wird es als vorteilhaft angesehen, dass die Pfosten einen C-förmigen oder ∑(sigma)-förmigen Querschnitt besitzen.

Eine zweckmäßige Gestaltung der von den Pfosten getragenen Riegel wird darin gesehen, dass diese einen U-förmigen Querschnitt mit einem Steg, zwei Schenkeln und zwei Flanschen aufweisen, wobei die Schenkel in Richtung auf die Flansche konvergierend verlaufen.

Die Erfindung ist nachfolgend anhand von in den Zeichnungen veranschaulichten Ausführungsbeispielen näher erläutert. Es zeigen:
- Figur 1: in einer Frontalansicht eine Solarmodul-Tragkonstruktion;
- Figur 2: eine Seitenansicht der Figur 1 in Richtung des Pfeils II gesehen;
- Figur 3: in perspektivischer Darstellung das Modulfeld der Tragkonstruktion der Figur 1;
- Figur 4: in vergrößertem Maßstab den Ausschnitt IV der Figur 3;
- Figur 5: eine Stirnansicht auf eine Ausführungsform einer Pfette eines ersten Typs der Tragkonstruktion der Figuren 1 bis 4;
- Figur 6: eine Stirnansicht auf eine weitere Ausführungsform einer Pfette eines ersten Typs der Tragkonstruktion der Figuren 1 bis 4;
- Figur 7: eine Stirnansicht auf eine Pfette eines zweiten Typs der Tragkonstruktion der Figuren 1 bis 4;
- Figur 8: in der Stirnansicht ein Klemmstück der Tragkonstruktion der Figur 1 bis 4;
- Figur 9: eine Montagesituation der Tragkonstruktion der Figuren 1 bis 4 im Bereich des Ausschnitts IX der Figur 2;
- Figur 10: eine weitere Montagesituation der Tragkonstruktion der Figuren 1 bis 4 im Bereich des Ausschnitts IX der Figur 2 und
- Figur 11: die endgültige Montagesituation der Tragkonstruktion der Figuren 1 bis 4 im Bereich des Ausschnitts IX der Figur 2.

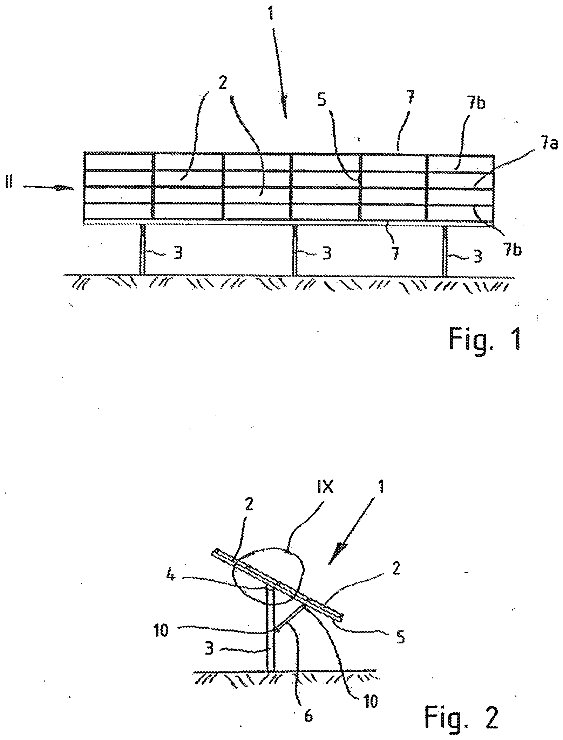

Mit 1 ist in den Figuren 1 und 2 eine Tragkonstruktion für plattenartige Solarmodule 2 bezeichnet. Die Tragkonstruktion 1 bildet zusammen mit den von ihr getragenen Solarmodulen 2 Bestandteil eines nicht näher dargestellten größeren Solarmodulfelds.

Die Solarmodul-Tragkonstruktion 1 weist vertikal ausgerichtete Pfosten 3, von den Pfosten 3 unter Eingliederung von Anschlusselementen 4 getragene geneigte Riegel 5, zwischen den Pfosten 3 und den Riegeln 5 vorgesehene Schrägstreben 6 und auf den Riegeln 5 in Querrichtung platzierte Pfetten 7, 7a eines ersten Typs und Pfetten 7b eines zweiten Typs als Träger der Solarmodule 2 auf.

Die Pfosten 3 weisen einen C-förmigen Querschnitt auf. Die mit den Pfosten 3 über die Anschlusselemente 4 verbundenen Riegel 5 besitzen einen U-förmigen Querschnitt. Zur Verbindung der Pfosten 3 mit den Riegeln 5 an den Kopfenden der Pfosten 3 dienen U-förmige Anschlusselemente 4 (Figuren 2 und 9 bis 11), welche sich aus einem geneigten Steg 8 und zwei Schenkeln 9 zusammensetzen. Über nicht näher dargestellte Schraubmittel werden die Anschlusselemente 4 mit den Pfosten 3 verbunden. Die Riegel 5 werden ebenfalls über nicht näher dargestellte Schraubmittel auf den Anschlusselementen 4 befestigt.

Auch die Schrägstreben 6 werden mittels nicht näher dargestellter Schraubmittel über Anschlusskonsolen 10 mit den Riegeln 5 verbunden. (Figur 2).

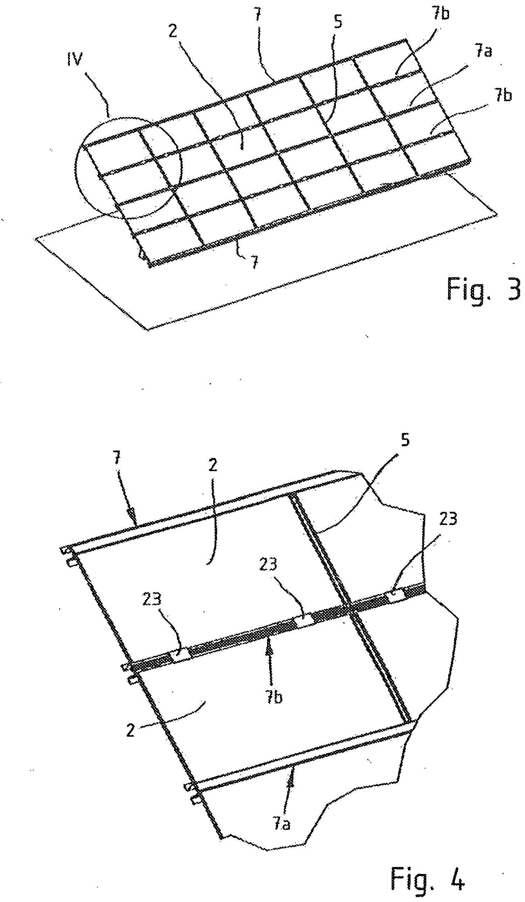

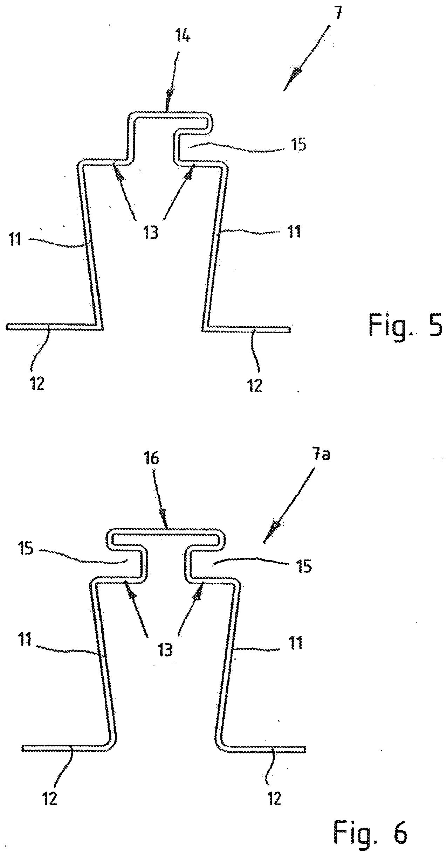

Die Pfetten 7, 7a, 7b der Solarmodul-Tragkonstruktion 1 der Figuren 1 bis 4 sind aus den Figuren 5 bis 7 näher erkennbar. Jede Pfette 7, 7a, 7b weist einen U-förmigen Querschnitt auf, der sich aus zwei Stützschenkeln 11, zwei Montageflanschen 12 und einem Tragsteg 13 zusammensetzt. Die Stützschenkel 11 verlaufen in Richtung auf die Montageflansche 12 konvergierend.

Bei der Ausführungsform gemäß Figur 5 einer Pfette 7 eines ersten Typs ist mittels einer L-förmigen Abkantung 14 des Tragstegs 13 eine seitliche Stecknute 15 gebildet. Diese Ausführungsform gelangt bei der Tragkonstruktion 1 am oberen und unteren Rand zum Einsatz.

Die Figur 6 zeigt eine Ausführungsform einer Pfette 7a eines ersten Typs, bei welcher mittels einer T-förmigen Abkantung 16 des Tragstegs 13 zwei seitliche Stecknuten 15 gebildet sind. Dieser Pfettentyp 7a wird im mittleren Höhenbereich der Tragkonstruktion 1 verwendet.

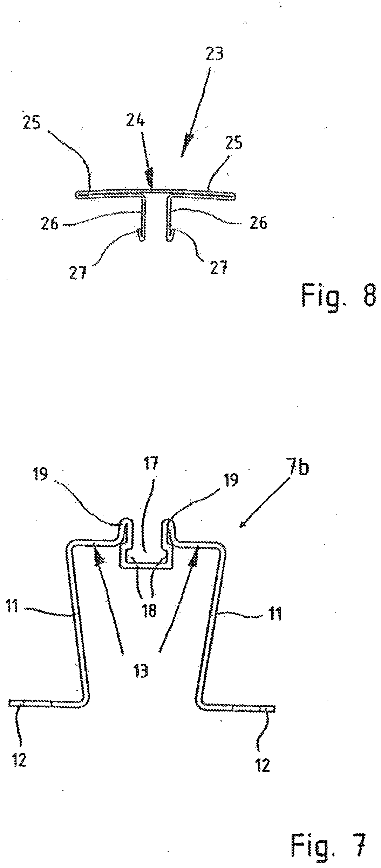

Mittig des Tragstegs 13 der Pfette 7b des zweiten Typs (Figur 7) ist eine nach oben offene Klemmnute 17 ausgebildet. Die Klemmnute 17 ist an ihrem inneren Ende mit seitlichen Hinterschneidungen 18 versehen. Ferner sind am Tragsteg 13 von den Montageflanschen 12 weg stehende Anschlagstege 19 ausgebildet.

Alle Pfetten 7, 7a, 7b werden durch Abkanten dünner Stahlplatinen gebildet.

Die Befestigung der Pfetten 7, 7a, 7b auf den Riegeln 5 erfolgt über nicht näher dargestellte Schraubmittel.

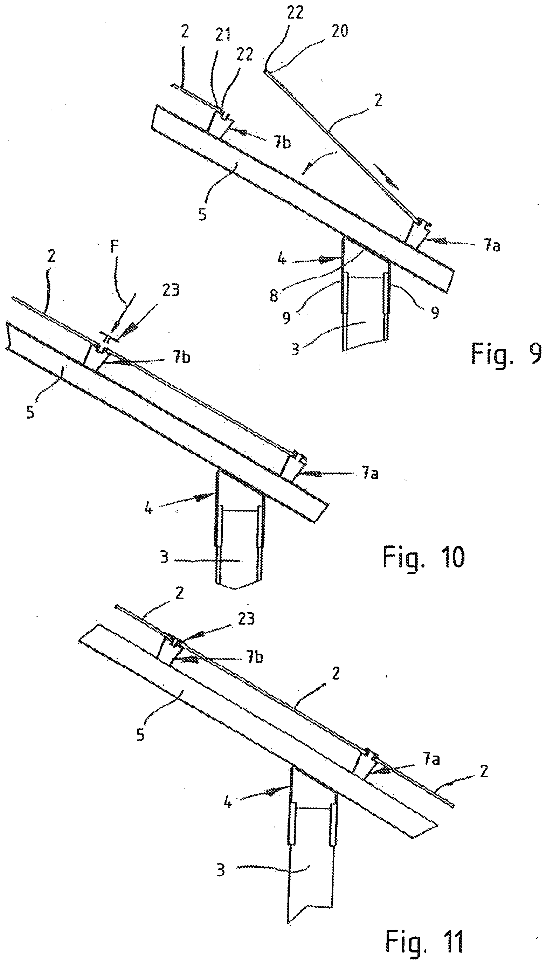

In der Montagesituation der Figur 9 ist angedeutet, dass zur federnd elastischen Auflage der Solarmodule 2 auf den Tragstegen 13 der Pfetten 7, 7a, 7b die oberen und unteren Ränder 20, 21 der Solarmodule 2 mit U-förmigen Dämpfungsleisten 22 versehen sind. Diese Dämpfungsleisten 22 bestehen aus Gummi oder einem vergleichsweise ähnlichen elastischen Werkstoff.

Zur einwandfreien Lagefixierung der Solarmodule 2 auf den Pfetten 7b des zweiten Typs dienen aus der Figur 8 näher erkennbare, im Querschnitt T-förmige Klemmstücke 23, die aus Federstahlplatinen abgekantet sind. Es ist zu sehen, dass jedes Klemmstück 23 eine Decklasche 24 mit seitlichen doppellagigen Spannflanschen 25 aufweist, welche in Richtung auf die freien Enden von zwei im seitlichen Abstand zueinander angeordneten Federschenkeln 26 hin konkav gekrümmt sind. An ihren freien Enden sind die Federschenkel 26 mit voneinander abgewandten, zu den Spannflanschen 25 hin weisenden Rasthaken 27 versehen.

Bei der Montage werden zum Beispiel die Solarmodule 2 in der unteren Reihe der Figur 1 zunächst mit ihren unteren Rändern 21, ähnlich der Darstellung gemäß Figur 9, in die nach oben weisende Stecknute 15 der hier angeordneten Pfette 7 des ersten Typs schräg eingeschoben und dann mit ihren oberen Rändern 20 auf den Tragsteg 13 der nächst höheren Pfette 7b des zweiten Typs abgelegt (Figur 10). Danach werden die Solarmodule 2 in der zweiten Reihe von unten mit ihren oberen Rändern 20 in die nach unten weisende Stecknute 15 der im mittleren Höhenbereich liegenden Pfette 7a des ersten Typs schräg eingeführt und dann mit ihren unteren Rändern 21 ebenfalls auf dem Tragsteg 13 der Pfette 7b des zweiten Typs abgelegt.

Werden nach Auflage der Solarmodule 2 auf den Pfetten 7, 7a, 7b die Klemmstücke 23, welche bevorzugt nur eine Teillänge eines Solarmoduls 2 besitzen, gemäß Figur 10 in die Klemmnute 17 der Pfette 7b des zweiten Typs eingeführt und mit einer Kraft F beaufschlagt (siehe auch Figuren 7 und 8), so gleiten die Federschenkel 26 auf Grund der zueinander V-förmig geneigten Rasthaken 27 in die Klemmnuten 17 hinein und nähern sich hierbei einander an. Bei weiterem Eindrücken der Federschenkel 26 in die Klemmnute 17 gelangen die Spannflansche 25 an den Dämpfungsleisten 22 an den Rändern 20, 21 der Solarmodule 2 zur Anlage. Bei anhaltender Kraft F werden dann die Mittelbereiche der Decklaschen 24 weiter eingedrückt, so dass die Decklaschen 24 sich strecken, wobei die Rasthaken 27 in den Bereich der Hinterschneidungen 18 gelangen und durch das Flachdrücken der Decklaschen 24 in die Hinterschneidungen 18 fassen. Dadurch, dass sich die Spannflansche 25 an den Dämpfungsleisten 22 abstützen, wird eine Spannkraft erzeugt, welche die sichere Festlegung der Solarmodule 2 auf den Pfetten 7, 7a, 7b gewährleistet.

Im Anschluss hieran werden auch die anderen Solarmodule 2 in der gleichen Weise an den Pfetten 7, 7a, 7b montiert, so dass eine nochmalige Erläuterung entbehrlich ist.

### Bezugszeichen:

- 1 -: Solarmodul-Tragkonstruktion
- 2 -: Solarmodule
- 3 -: Pfosten
- 4 -: Anschlusselemente
- 5 -: Riegel
- 6 -: Schrägstreben
- 7 -: Pfetten eines ersten Typs
7a - Pfetten eines ersten Typs
7b - Pfetten eines zweiten Typs
- 8 -: Stege v. 4
- 9 -: Schenkel v. 4
- 10 -: Anschlusskonsole
- 11 -: Stützschenkel v. 7, 7a, 7b
- 12 -: Montageflansche v. 7, 7a, 7b
- 13 -: Tragstege v. 7, 7a, 7b
- 14 -: L-förmige Abkantung an 7
- 15 -: Stecknute in 7, 7a
- 16 -: T-förmige Abkantung an 7a
- 17 -: Klemmnute an 7b
- 18 -: Hinterschneidungen an 17
- 19 -: Anschlagstege an 7b
- 20 -: oberer Rand v. 2
- 21 -: unterer Rand v. 2
- 22 -: Dämpfungsleisten
- 23 -: Klemmstücke
- 24 -: Decklasche v. 23
- 25 -: Spannflansche an 24
- 26 -: Federschenkel v. 23
- 27 -: Rasthaken an 26
- F -: Kraft

## Patentansprüche

1. Anordnung mit Solarmodul-Tragkonstruktion (1) und Solarmodulen (2), wobei die Solarmodul-Tragkonstruktion (1) vertikal ausgerichtete Pfosten (3), von den Pfosten (3) unter Eingliederung von Anschlusselementen (4) getragene geneigte Riegel (5), zwischen den Pfosten (3) und den Riegeln (5) vorgesehene Schrägstreben (6) und auf den Riegeln (5) in Querrichtung platzierte Pfetten (7, 7a, 7b) als Träger der Solarmodule (2) aufweist, wobei die Pfetten (7, 7a, 7b) einen U-förmigen Querschnitt aufweisen, der sich aus zwei Stützschenkeln (11), zwei Montageflanschen (12) und einem Tragsteg (13) zusammensetzt, **dadurch gekennzeichnet, dass** Pfetten (7, 7a) eines ersten Typs und Pfetten (7b) eines zweiten Typs vorgesehen sind, wobei oberhalb der Tragstege (13) der Pfetten (7, 7a) des ersten Typs seitliche Stecknuten (15) ausgebildet sind, in welche Ränder (20, 21) der Solarmodule (2) eingeführt sind und andererseits mittig der Tragstege (13) der Pfetten (7b) des zweiten Typs nach oben offene Klemmnuten (17) ausgebildet sind, in welchen Federschenkel (26) von T-förmigen Klemmstücken (23) mit zu den Federschenkeln (26) hin konkav gebogenen Decklaschen (24) aufgenommen sind, wobei die Decklaschen (24) mit den neben den Klemmnuten (17) befindlichen Abschnitten der Tragstege (13) Ränder (20, 21) der Solarmodule (2) einspannen.

2. Anordnung nach Anspruch 1, **dadurch gekennzeichnet, dass** die Klemmnuten (17) an den Tragstegen (13) an ihren inneren Enden mit seitlichen Hinterschneidungen (18) versehen sind und die Federschenkel (26) der Klemmstücke (23) an ihren zu den Decklaschen (24) fernen Enden voneinander abgewandte, zu den Decklaschen (24) weisende Rasthaken (27) besitzen.

3. Anordnung nach Anspruch 1 oder 2, **dadurch gekennzeichnet, dass** an den Tragstegen (13) der Pfetten (7b) des zweiten Typs von den Montageflanschen (12) abgewandte Anschlagstege (19) ausgebildet sind.

4. Anordnung nach einem der Ansprüche 1 bis 3, **dadurch gekennzeichnet, dass** die Klemmstücke (23) aus abgekanteten Stahlplatinen gebildet sind.

5. Anordnung nach einem der Ansprüche 1 bis 3, **dadurch gekennzeichnet, dass** die Klemmstücke (23) aus Kunststoff bestehen.

6. Anordnung nach einem der Ansprüche 1 bis 3, **dadurch gekennzeichnet, dass** die Klemmstücke (23) aus einem kohlefaserverstärkten Werkstoff gebildet sind.

7. Anordnung nach einem der Ansprüche 1 bis 6, **dadurch gekennzeichnet, dass** die Stecknuten (15) an den Pfetten (7, 7a) des ersten Typs von L- oder T-förmigen mittleren Abkantungen (14, 16) der Tragstege (13) gebildet sind.

8. Anordnung nach einem der Ansprüche 1 bis 7, **dadurch gekennzeichnet, dass** die Ränder (20, 21) der Solarmodule (2) von U-förmigen Dämpfungsleisten (22) umgriffen sind.

9. Anordnung nach Anspruch 8, **dadurch gekennzeichnet, dass** die Dämpfungsleisten (22) aus Gummi oder einem vergleichsweise ähnlichen elastischen Werkstoff bestehen.

10. Anordnung nach einem der Ansprüche 1 bis 9, **dadurch gekennzeichnet, dass** die Stützschenkel (11) aller Pfetten (7, 7a, 7b) in Richtung auf die Montageflansche (12) konvergierend verlaufen.

11. Anordnung nach einem der Ansprüche 1 bis 10, **dadurch gekennzeichnet, dass** die Anschlusselemente (4) zwischen den Pfosten (3) und den Riegeln (5) begrenzt schwenkbar und die Schrägstreben (6) längenveränderbar ausgebildet sind.

12. Anordnung nach einem der Ansprüche 1 bis 11, **dadurch gekennzeichnet, dass** die Pfosten (3) einen C-förmigen Querschnitt besitzen.

13. Anordnung nach einem der Ansprüche 1 bis 12, **dadurch gekennzeichnet, dass** der Pfosten (3) einen ∑(sigma)-förmigen Querschnitt besitzt.

## Claims

1. Assembly comprising a solar module supporting structure (1) and solar modules (2), wherein the solar module supporting structure (1) has vertically oriented posts (3), inclined bars (5) with integrated connecting elements (4) supported by the posts (3), inclined struts (6) provided between the posts (3) and bars(5), and purlins (7, 7a, 7b) mounted on the bars(5) in a transverse direction as supports for the solar modules (2), the purlins(7, 7a, 7b) having a U-shaped cross-section which is composed of two bracing legs (11), two mounting flanges (12) and a supporting web (13), **characterized in that** purlins (7, 7a) of a first type and purlins (7b) of a second type are provided, while above the supporting webs (13) of the purlins (7, 7a) of the first type lateral plug-in grooves (15) are provided in which edges (20, 21) of the solar modules (2) are inserted and **in that** clamping grooves (17)that are open towards the top are provided at the center of the supporting webs (13) of the purlins (7b) of the second type, said clamping grooves (17)receiving spring legs (26) of T-shaped clamping pieces (23) which have cover flaps (24) concavely bent towards the spring legs (26), the cover flaps (24) clamping the edges (20, 21) of the solar modules (2) by means of the sections of the supporting webs (13) located next to the clamping grooves (17).

2. Assembly according to claim 1, **characterized in that** the clamping grooves (17) on the supporting webs (13) comprise lateral undercuts (18) at their inner ends and the spring legs (26) of the clamping pieces (23) comprise locking hooks (27) at their ends furthest from the cover flaps (24), the locking hooks (27) being remote from one another and pointing towards the cover flaps (24).

3. Assembly according to any of claims 1 or 2, **characterized in that** stop ridges (19) are provided on the supporting webs (13) of purlins (7b) of the second type, the stop ridges (19) being remote from the mounting flanges (12).

4. Assembly according to any of claims 1 to 3, **characterized in that** the clamping pieces (23) are formed of folded steel blanks.

5. Assembly according to any of claims 1 to 3, **characterized in that** the clamping pieces (23) are made of plastic.

6. Assembly according to any of claims 1 to 3, **characterized in that** the clamping pieces (23) are made of carbon fiber-reinforced material.

7. Assembly according to any of claims 1 to 6, **characterized in that** the plug-in grooves (15) on the purlins (7, 7a) of the first type are formed of L- or T-shaped central folds (14, 16) of the supporting webs (13).

8. Assembly according to any of claims 1 to 7, **characterized in that** the edges (20, 21) of the solar modules (2) are surrounded by U-shaped shock-absorbing slats (22).

9. Assembly according to claim 8, **characterized in that** the shock-absorbing slats (22) are made of rubber or a comparatively similar elastic material.

10. Assembly according to any of claims 1 to 9, **characterized in that** the bracing legs (11) of each purlin (7, 7a, 7b) extend in a convergent manner towards the mounting flanges (12).

11. Assembly according to any of claims 1 to 10, **characterized in that** the connecting elements (4) between the posts (3) and bars (5) are able to swivel to a limited extent, and the inclined struts (6) are adjustable in length.

12. Assembly according to any of claims 1 to 11, **characterized in that** the posts (3) have a C-shaped cross section.

13. Assembly according to any of claims 1 to 12, **characterized in that** the post (3) has a ∑(sigma)-shaped cross section.

## Revendications

1. Dispositif avec construction porteuse de modules solaires (1) et modules solaires (2), la construction porteuse de modules solaires (1) comportant des montants (3) orientés verticalement, des barres (5) inclinées portées par les montants (3) avec insertion d'éléments de liaison (4), des entretoises obliques (6) prévues entre les montants (3) et les barres (5) et des pannes (7, 7a, 7b) placées en direction transversale sur les barres (5) comme supports des modules solaires (2), les pannes (7, 7a, 7b) ayant une section transversale en forme de U qui se compose de deux branches de soutien (11), de deux rebords de montage (12) et d'une traverse porteuse (13), **caractérisé en ce qu'** il est prévu des pannes (7, 7a) d'un premier type et des pannes (7b) d'un deuxième type, des rainures d'emboîtement latérales (15) étant conçues au-dessus de la traverse porteuse (13) des pannes (7, 7a) du premier type, rainures d'emboîtement dans lesquelles sont introduits des bords (20, 21) des modules solaires (2), et d'autre part des rainures de serrage (17) ouvertes vers le haut étant conçues au centre de la traverse porteuse (13) des pannes (7b) du deuxième type, rainures de serrage dans lesquelles des branches de ressort (26) de pièces de serrage (23) en forme de T sont logées avec des éclisses (24) courbées de manière concave vers les branches de ressort (26), les éclisses (24) avec les tronçons de la traverse porteuse (13) qui sont situés à côté des rainures de serrage (17) serrant ce faisant des bords (20, 21) des modules solaires (2).

2. Dispositif selon la revendication 1, **caractérisé en ce que** les rainures de serrage (17) sont munies de formes rentrantes latérales (18) à leurs extrémités intérieures au niveau des traverses porteuses (13) et les branches de ressort (26) des pièces de serrage (23) ont des crochets (27) qui s'éloignent l'un de l'autre et qui pointent vers les éclisses (24) à leurs extrémités éloignées des éclisses (24).

3. Dispositif selon la revendication 1 ou 2, **caractérisé en ce que** des traverses de butée (19) éloignées des rebords de montage (12) sont conçues sur les traverses porteuses (13) des pannes (7b) du deuxième type.

4. Dispositif selon l'une des revendications 1 à 3, **caractérisé en ce que** les pièces de serrage (23) sont formées à partir de platines d'acier repliées.

5. Dispositif selon l'une des revendications 1 à 3, **caractérisé en ce que** les pièces de serrage (23) sont en plastique.

6. Dispositif selon l'une des revendications 1 à 3, **caractérisé en ce que** les pièces de serrage (23) sont formées à partir d'un matériau renforcé par des fibres de carbone.

7. Dispositif selon l'une des revendications 1 à 6, **caractérisé en ce que** les rainures d'emboîtement (15) sur les pannes (7, 7a) du premier type sont formées de replis médians (14, 16), en forme de L ou de T, de la barre porteuse (13).

8. Dispositif selon l'une des revendications 1 à 7, **caractérisé en ce que** les bords (20, 21) des modules solaires (2) sont entourés par des baguettes d'amortissement (22) en forme de U.

9. Dispositif selon la revendication 8, **caractérisé en ce que** les baguettes d'amortissement (22) sont en caoutchouc ou en un matériau élastique relativement analogue.

10. Dispositif selon l'une des revendications 1 à 9, **caractérisé en ce que** les branches de soutien (11) de toutes les pannes (7, 7a, 7b) s'étendent de manière à converger en direction des rebords de montage (12).

11. Dispositif selon l'une des revendications 1 à 10, **caractérisé en ce que** les éléments de liaison (4) sont conçus pivotants de manière limitée entre les montants (3) et les barres (5) et les entretoises obliques (6) sont conçues variables en longueur.

12. Dispositif selon l'une des revendications 1 à 11, **caractérisé en ce que** les montants (3) ont une section transversale en forme de C.

13. Dispositif selon l'une des revendications 1 à 12, **caractérisé en ce que** les montants (3) ont une section transversale en forme de ∑(sigma).
